# EUROPEAN PATENT APPLICATION

(11) **EP 3 064 110 A1**
(43) Date of publication of application: **07.09.2016**
(21) Application number: 15290056.9
(22) Date of filing: 03.03.2015
(51) Int. Cl.: A47J 43/07, B26D 1/29, B26D 3/22

(54) **FOOD PROCESSING APPLIANCE AND SLICING DISK FOR SAID FOOD PROCESSING APPLIANCE**

(71) Applicant: Electrolux Professionel SAS, 60300 Senlis (FR)
(72) Inventor: Lagier, Christophe, 23200 Aubusson (FR); Vialtaix, Mathieu, 23700 Rougnat (FR)
(74) Representative: Maccalli, Marco

(57) **Abstract**

A food processing appliance (100) is provided. The food processing appliance (100) comprises a slicing disk (110) operable to be rotated about a rotation axis (125) for cutting food products. The slicing disk (110) comprises:
- a support disk (200) provided with at least two food openings (214) for the passage of cut pieces of food;
- at least two blades (220), each one of said at least two blades (220) being located at a corresponding one among said at least two food openings (214);
- a central hub region (210) connected or connectable to a drive shaft (240) of said food processing appliance (100), for driving into rotation the slicing disk (110) about the rotation axis (125), and
- a spacer element (250) for spacing the at least two blades (220) from the at least two food openings (214) along a direction parallel to the rotation axis (125).

The spacer element (250) is a single-piece element supporting said at least two blades (220) and superimposed at least partially on the central hub region (210) along the rotation axis (125).

## Description

The present invention relates to the food processing field. More specifically, the present invention relates to an appliance for processing food products and to a corresponding slicing disk to be used in an appliance of such type.

Food processing appliances of the cutting type are widely known, equipped with a slicing disk provided with blades, which is adapted to be driven into rotation for slicing food products put into contact with the slicing disk. The blades of the slicing disk are typically located at openings of the slicing disk for the passage of cut pieces of food into a receptacle the slicing disk is installed thereon.

For example, EP 2561780 discloses a cutting disk for cutting foodstuffs, intended for a receptacle of an appliance of the vegetable cutting type, comprising: a rotary drive hub, a supporting disk firmly secured to the hub, and at least one blade attached on the supporting disk and extending radially from the hub, wherein the blade comprises a cutting edge with the shape of an «S», the convex portion of the «S» being located on the side of the hub so as to cause the foodstuff to slide against the cutting edge from a central area of the receptacle towards a middle portion of the cutting edge under the action of the rotation of the supporting disk and of the blade, and the concave portion of the «S» being configured as a sickle in order to cause the foodstuffs to slide against the cutting edge from a peripheral area of the receptacle towards the middle portion.

It is also known to mount the blades of the slicing disk on spacer elements to properly set the distance between the blades and the surface of the slicing disk to calibrate the thickness of the cut pieces of food. Typically, each blade is mounted on a respective and different spacer element, for example by means of fixing screws passing through overlapping holes located on the spacer element, the support disk and the blade.

Applicant has found that a solution of this type is affected by drawbacks. Indeed, being the blades mounted on different spacer elements, the slicing disk has a reduced overall mechanical rigidity and a reduced stability. Indeed, when the slicing disk rotates, each blade/spacer element assembly has to respond to torsional stresses individually, with the result that the blades may disadvantageously bend, therefore reducing the cutting quality and with the risk of damaging the blades themselves.

In view of the above, Applicant has handled the problem of providing a slicing disk provided with an increased mechanical rigidity and an increased stability.

An aspect of the present invention relates to a food processing appliance comprising a slicing disk operable to be rotated about a rotation axis for cutting food products. The slicing disk comprises:
- a support disk provided with at least two food openings for the passage of cut pieces of food;
- at least two blades, each one of said at least two blades being located at a corresponding one among said at least two food openings;
- a central hub region connected or connectable to a drive shaft of said food processing appliance, for driving into rotation the slicing disk about the rotation axis, and
- a spacer element for spacing the at least two blades from the at least two food openings along a direction parallel to the rotation axis.

The spacer element is a single-piece element supporting said at least two blades and superimposed at least partially on the central hub region along the rotation axis.

According to an embodiment of the present invention the spacer element is fixed to the central hub region.

According to an embodiment of the present invention the drive shaft is connected or connectable to the central hub region of the support disk. The rotation axis of said slicing disk passes through such central hub region, and each one of the at least two food openings radially extends along the support disk with respect to said central hub region. The spacer element comprises a central portion connected or connectable to the drive shaft and a set of peripheral portions. Each peripheral portion radially extends with respect to the central portion following at least a portion of a corresponding one of said at least two food openings.

According to an embodiment of the present invention each one of said at least two blades is mounted on a corresponding peripheral portion of the spacer element.

According to an embodiment of the present invention the central hub region of the support disk comprises a central opening. The central portion of the spacer element comprises a ring-shaped element.

According to an embodiment of the present invention, the drive shaft is fitted into said central opening and into said ring-shaped element.

According to an embodiment of the present invention the central hub region is connected to the drive shaft through a connector element fitted on one side on the drive shaft, and on the other side in the central opening and in the ring-shaped element.

According to an embodiment of the present invention the support disk comprises two food openings. The spacer element comprises two peripheral portions. Said at least two blades comprise two blades, each blade being mounted on a respective peripheral portion of the spacer element.

According to an embodiment of the present invention the spacer element, the support disk and the at least two blades are fixed to each other by means of fixing screws passing through overlapping holes located respectively on the spacer element, the support disk and the at least two blades.

According to an embodiment of the present invention the spacer element, the support disk, the at least two blades and the drive shaft are fixed to each other by means of fixing screws passing through overlapping holes located respectively on the spacer element, the support disk, the at least two blades and the drive shaft.

According to an embodiment of the present invention the spacer element, the support disk, the at least two blades and the connector element are fixed to each other by means of fixing screws passing through overlapping holes located respectively on the spacer element, the support disk, the at least two blades and the connector element.

According to an embodiment of the present invention the spacer element is made of stainless steel.

Another aspect of the present invention relates to a slicing disk for a food processing appliance. The slicing disk is operable to be rotated about a rotation axis for cutting food products. The slicing disk comprises:
- a support disk provided with at least two food openings for the passage of cut pieces of food;
- at least two blades, each one of said at least two blades being located at a corresponding one among said at least two food openings;

- a central hub region connected or connectable to a drive shaft of said food processing appliance, for driving into rotation the slicing disk about the rotation axis, and
- a spacer element for spacing the at least two blades from the at least two food openings along a direction parallel to the rotation axis.

The spacer element is a single-piece element supporting said at least two blades and superimposed at least partially on the central hub region along the rotation axis.

These and other features and advantages of the present invention will be made apparent by the following description of some exemplary and non limitative embodiments thereof; for its better intelligibility, the following description should be read making reference to the attached drawings, wherein:
Figure 1 is a perspective view with partially removed parts of a food processor appliance comprising a slicing disk according to an embodiment of the present invention;
Figure 2 is a perspective exploded view of a slicing disk according to an embodiment of the present invention;
Figure 3 is a perspective view from below of a slicing disk according to an embodiment of the present invention;
Figure 4 is a perspective view from above of a slicing disk according to an embodiment of the present invention;
Figure 5 is a sectional view of a slicing disk according to an embodiment of the present invention.

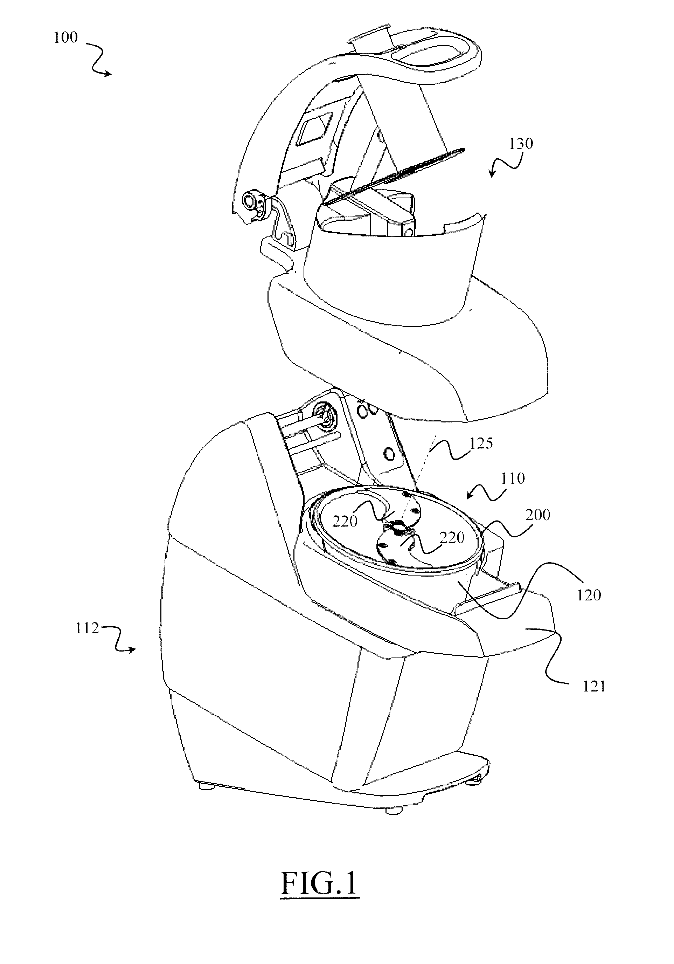

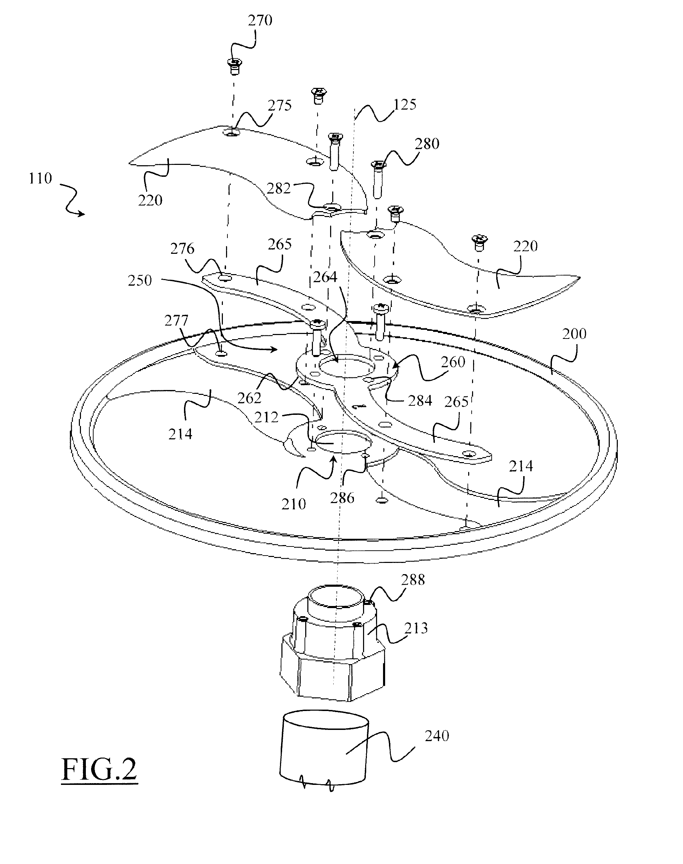

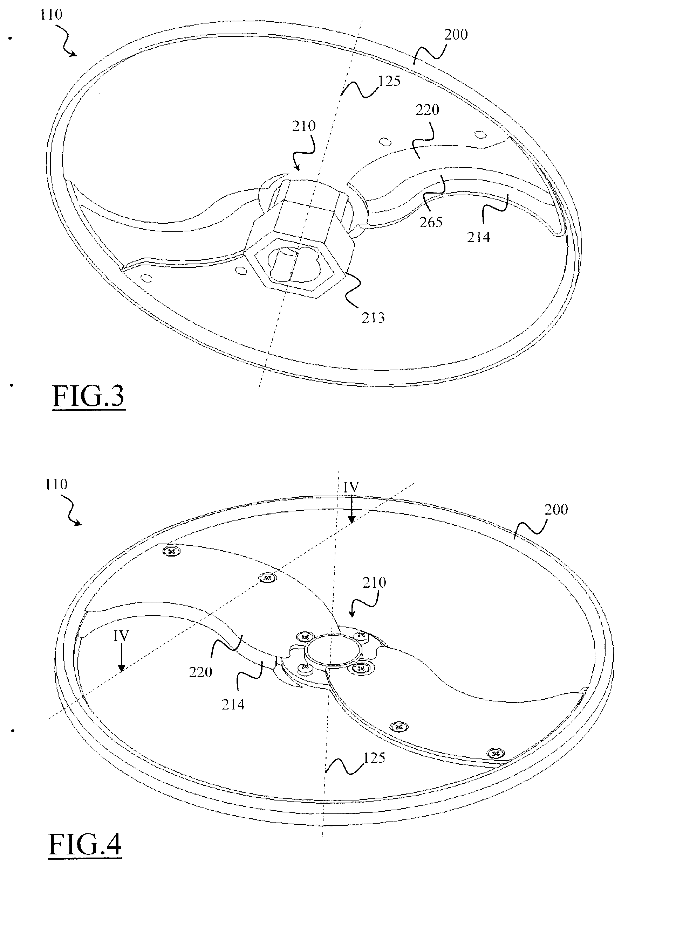

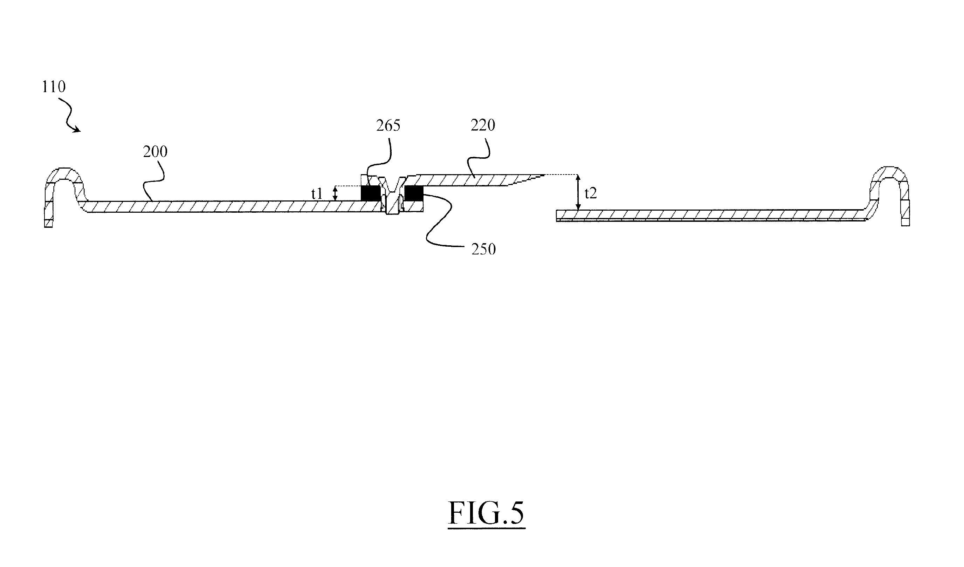

Figure 1 is a perspective view with partially removed parts of a food processor appliance 100 comprising a slicing disk 110 according to an embodiment of the present invention. Figure 2 is a perspective exploded view of the slicing disk 110. Figures 3 and 4 are a perspective view from below and a perspective view from above, respectively, of the slicing disk 110. Figure 5 is a sectional view of the slicing disk 110 taken along a section plane perpendicular to the slicing disk 110 and passing along the section line IV-IV of Figure 4.

The food processor appliance 100 preferably comprises a main body 112 housing an electric motor block (not shown) as well as electric and electronic components for controlling the operation of the food processor appliance 100, for example for setting the rotation speed of the slicing disk 110. Preferably, the main body 112 further comprises a receptacle 120 adapted to collect the pieces of food cut by the slicing disk 110 and to direct them towards the external of the machine, via an ejector 121. The slicing disk 110 is received in a removable way in the receptacle 120 through a top opening of the latter. As will be described in greater detail in the following of the description, the slicing disk 110 is operable to be rotated about a rotation axis 125 through a drive shaft 240 driven into rotation by the electric motor block. A hopper 130 for the introduction of food products to be cut by the slicing disk 110 is preferably provided on the top of the main body to cover the receptacle 120 and the slicing disk 110.

When a piece of food (*e.g.,* a vegetable) is inserted through the hopper 130 to be brought into contact with the slicing disk 110, as the slicing disk 110 rotates, slices are cut away from the piece of food by the slicing disk 110 and they are collected by the receptacle 120 located below the slicing disk 110, and directed towards the external of the machine via ejector 121.

The slicing disk 110 comprises a support disk 200, preferably made of steel, more preferably made of stainless steel, comprising a central hub region 210 provided with a central opening 212. The central hub region 210 is adapted to be connected to a drive shaft 240 operable to be driven in rotation by the electric motor block of the food processor appliance 100 for rotating the slicing disk 110 about the rotation axis 125. Preferably, the support disk 200 and the drive shaft 240 are connected to each other through a connector 213 adapted to be fitted on the head of the drive shaft 240 and into the central opening 212 of the central hub region 210.

Two or more food openings 214 (two, in the example illustrated in figures), for the passage of cut pieces of food toward the receptacle 120 located below the slicing disk 110, radially extend along the support disk 200 with respect to said central hub region 210.

For each one of said food openings 214, the slicing disk 110 comprises a corresponding blade 220 mounted at said food opening 214 for covering a corresponding portion thereof. Advantageously, as visible in Figures 3 and 4, each blade 220 is mounted above the corresponding food opening 214 in such a way to at least partially protrude over the corresponding food opening 214 and to leave uncovered a portion of the latter, through which the cut pieces of food may pass to be collected by the receptacle 120 located below.

According to an embodiment of the present invention, all the blades 220 are mounted on a same single-piece spacer element 250 interposed between the blades 220 and the support disk 200. As visible in Figure 5, the thickness t1 (along the direction of the rotation axis 125) of the spacer element 250 sets the distance t2 (along the direction of the rotation axis 125) between the blades 220 and the surface of the support disk 200, to correspondingly calibrate the thickness of the cut pieces of food.

According to an embodiment of the present invention, the spacer element 250 comprises a central portion 260 which, when spacer element 250 is mounted on the support disk 200, is superimposed on (at least a portion of) the central hub region of the support disk 200, and a set of, preferably elongated, peripheral portions 265 (two, in the example illustrated in figures), each one adapted to support a corresponding blade 220. Each peripheral portion 265 radially extends with respect to the central portion 260 following at least a portion of a corresponding food opening 214. Advantageously, the central portion 260 comprises a ring-shaped element 262 provided with a central opening 264. Advantageously, the spacer element 250 is structured and positioned in such a way that when it is mounted on the support disk 200, each peripheral portion 265 thereof leaves uncovered at least a portion of the food opening 214 corresponding to the blade 220 supported by such peripheral portion 260, and the central opening 264 of the ring-shaped element 262 is aligned with the central opening 212 of the central hub region 210.

Preferably, the spacer element 250 is made of steel, more preferably made of stainless steel.

Preferably, the support disk 200, the spacer element 250 and the blades 220 are fixed to each other by means of fixing screws 270 passing through overlapping holes located respectively on the support disk 220, the spacer element 250 and the blades 220. Preferably, although not necessarily, said overlapping holes comprise holes 275 arranged on each blade 220 along a corresponding border thereof, holes 276 arranged on the corresponding peripheral portion 265 of the spacer element 250, and holes 277 arranged on the support disk 200 along a border of the corresponding food opening 214.

Preferably, the slicing disk 110 is adapted to be connected with the drive shaft 240 through the connector 213, advantageously by means of further fixing screws 280 passing through further overlapping holes located respectively on the support disk 220, the spacer element 250, the blades 220, and the connector 213. Preferably, although not necessarily, said further overlapping holes comprise one or more holes 282 arranged on each blade 220 at the end thereof which is close to the centre of the slicing disk 200, holes 284 arranged on the ring-shaped element 262 of the central portion 260 of the spacer element 250, holes 286 arranged on the support disk 200 around the central opening 212 of the central hub region 210, and holes 288 arranged on the connector 213.

Thanks to the peculiar structure of the spacer element 250 according to the embodiments of the present invention, the slicing disk 110 has an improved overall mechanical rigidity and an improved stability compared to the known solutions, since in the slicing disk 110 according to the embodiments of the invention, all the blades 220 are mounted on a same single-piece spacer element 250 (each blade 220 being mounted on a respective peripheral portion 265 thereof). In this way, during the slicing disk 110 rotation, the torsional stresses affect a single and more robust assembly, *i.e.,* the blades/spacer element assembly, avoiding (or at least reducing) any occurrence of blade bending.

The previous description presents and discusses in detail several embodiments of the present invention; nevertheless, several changes to the described embodiments, as well as different invention embodiments are possible, without departing from the scope defined by the appended claims.

For example, although in the present description reference has been explicitly made to a slicing disk comprising two food openings and two blades, the concepts of the present invention can be also applied to slicing disks having more than two food openings and blades.

Moreover, similar considerations apply in case the spacer element has a different shape, provided that it is made of a single piece and is superimposed at least partially on the central hub region of the support disk.

Furthermore, the concepts of the present invention may be also applied to a solution in which the positions of the holes adapted to receive the fixing screws on the blades/spacer element/support disk are different from the ones shown in the figures.

Although in the present description reference has been made to a connector element designed to couple the slicing disk with the drive shaft of the food processing appliance, the concepts of the present invention may be also applied to the case in which the drive shaft is directly coupled with the central hub region of the slicing disk without the need of any connector.

## Claims

1. A food processing appliance (100) comprising a slicing disk (110) operable to be rotated about a rotation axis (125) for cutting food products, the slicing disk (110) comprising:
- a support disk (200) provided with at least two food openings (214) for the passage of cut pieces of food;
- at least two blades (220), each one of said at least two blades (220) being located at a corresponding one among said at least two food openings (214);
- a central hub region (210) connected or connectable to a drive shaft (240) of said food processing appliance (100), for driving into rotation the slicing disk (110) about the rotation axis (125), and
- a spacer element (250) for spacing the at least two blades (220) from the at least two food openings (214) along a direction parallel to the rotation axis (125),
**characterized in that**
- the spacer element (250) is a single-piece element supporting said at least two blades (220) and superimposed at least partially on the central hub region (210) along the rotation axis (125).

2. The food processing appliance (100) of claim 1, wherein the spacer element (250) is fixed to the central hub region (210).

3. The food processing appliance (100) of claim 2, wherein
- the drive shaft (240) is connected or connectable to the central hub region (210) of the support disk (200), the rotation axis (125) of said slicing disk (110) passing through such central hub region (210), and each one of the at least two food openings (214) radially extending along the support disk (200) with respect to said central hub region (210);
- the spacer element (250) comprises a central portion (260) connected or connectable to the drive shaft (240) and a set of peripheral portions (265), each peripheral portion (265) radially extending with respect to the central portion (260) following at least a portion of a corresponding one of said at least two food openings (214).

4. The food processing appliance (100) of claim 3, wherein each one of said at least two blades (220) is mounted on a corresponding peripheral portion (265) of the spacer element (250).

5. The food processing appliance (100) of claim 3 or 4, wherein:
- the central hub region (210) of the support disk (200) comprises a central opening (212);
- the central portion (260) of the spacer element (250) comprises a ring-shaped element (262).

6. The food processing appliance (100) of claim 5, wherein:
- the drive shaft (240) is fitted into said central opening (212) and into said ring-shaped element (262).

7. The food processing appliance (100) of claim 5, wherein the central hub region (210) is connected to the drive shaft (240) through a connector element (213) fitted on one side on the drive shaft (240), and on the other side in the central opening (212) and in the ring-shaped element (262).

8. The food processing appliance (100) of any one among claims 3 to 7, wherein the support disk (200) comprises two food openings (214), the spacer element (260) comprises two peripheral portions (265), and said at least two blades (220) comprise two blades (220), each blade (220) being mounted on a respective peripheral portion (265) of the spacer element (250).

9. The food processing appliance (100) of any one among the preceding claims, wherein the spacer element (250), the support disk (200) and the at least two blades (220) are fixed to each other by means of fixing screws (270) passing through overlapping holes (275, 276, 277) located respectively on the spacer element (250), the support disk (200) and the at least two blades (220).

10. The food processing appliance (100) of claim 6, wherein the spacer element (250), the support disk (200), the at least two blades (220) and the drive shaft (240) are fixed to each other by means of fixing screws passing through overlapping holes located respectively on the spacer element, the support disk, the at least two blades and the drive shaft (240).

11. The food processing appliance (100) of claim 7, wherein the spacer element (250), the support disk (200), the at least two blades (220) and the connector element (213) are fixed to each other by means of fixing screws (280) passing through overlapping holes (282, 284, 286, 288) located respectively on the spacer element (250), the support disk (200), the at least two blades (220) and the connector element (213).

12. The food processing appliance (100) of any one among the preceding claims, wherein the spacer element (250) is made of stainless steel.

13. A slicing disk (110) for a food processing appliance (100), the slicing disk (110) being operable to be rotated about a rotation axis (125) for cutting food products, the slicing disk (110) comprising:
- a support disk (200) provided with at least two food openings (214) for the passage of cut pieces of food;
- at least two blades (220), each one of said at least two blades (220) being located at a corresponding one among said at least two food openings (214)
- a central hub region (210) connected or connectable to a drive shaft (240) of said food processing appliance (100), for driving into rotation the slicing disk (110) about the rotation axis (125), and
- a spacer element (250) for spacing the at least two blades (220) from the at least two food openings (214) along a direction parallel to the rotation axis (125),
**characterized in that**
- the spacer element (250) is a single-piece element supporting said at least two blades (220) and superimposed at least partially on the central hub region (210) along the rotation axis (125).
